# EUROPEAN PATENT SPECIFICATION

(11) **EP 0 740 760 B1**
(45) Date of publication and mention of the grant of the patent: **30.12.1998**
(21) Application number: 95905667.2
(22) Date of filing: 20.01.1995
(51) Int. Cl.: F24F 5/00, F24D 10/00, F25B 29/00

(54) **A METHOD CONCERNING A THERMAL ENERGY DISTRIBUTION SYSTEM, AND A THERMAL ENERGY DISTRIBUTION SYSTEM**
VERFAHREN HINSICHTLICH EINER THERMISCHEN ENERGIEVERTEILUNGSANORDNUNG UND THERMISCHE ENERGIEVERTEILUNGSANORDNUNG
PROCEDE RELATIF A UN SYSTEME DE DISTRIBUTION D'ENERGIE THERMIQUE, ET SYSTEME DE DISTRIBUTION D'ENERGIE THERMIQUE

(30) Priority: 24.01.1994 FI 940344
(43) Date of publication of application: 06.11.1996
(73) Proprietor: ABB INSTALLAATIOT OY, 21530 Paimio (FI)
(72) Inventor: LESKINEN, Seppo, (FI)
(74) Representative: Valkeiskangas, Tapio Lassi Paavali
(86) International application number: FI9500026
(87) International publication number: WO9520133

(56) References cited:
- WO-A-93/10403
- DE-A- 2 817 093
- GB-A- 2 025 028
- US-A- 3 853 172
- US-A- 4 054 035

## Description

The invention relates to a method concerning a thermal energy distribution system, in which method heating energy absorbed into a heat carrier and concentratedly generated for heating of buildings is distributed by means of one pipe or one group of pipes to heating devices arranged in the buildings and, correspondingly, cooling energy concentratedly generated by an absorption-type cooling aggregate is distributed by a second pipe or group of pipes to cooling devices in the buildings. The invention also relates to a thermal energy distribution system.

Today the most common way of cooling buildings is using cooling aggregates that are based on a compressor aggregate and are dispersed to places of use. In them, cooling power is generated by means of electricity. The proportion of the cooling of buildings to the consumption of electricity is already significant; e.g. in the South of Europe the electricity consumption peaks in the summer. Further, the timing of the consumption is disadvantageous in view of the production. Apart from the production of hot tap water, there are hardly any other uses for the heat inevitably generated as electricity is produced, and so it has to be condensated in the waterways e.g. by sea-water condensers or in the air by means of cooling towers.

Cooling power could also be produced by waste heat obtained from the production of electricity in so-called absorption aggregates, the best known of such aggregates being lithiumbromide/water and ammonia/water aggregates. Consumption of electricity and thus e.g. CO₂ emissions could be reduced thereby, and waste heat, which at present is totally wasted, could be put into use.

The most inexpensive way of generating cold would be a so-called district cooling system, in which cooling power would be concentratedly produced in power plants and distributed to users via a piping network in the same way as district heat. This would have a positive effect e.g. on servicing costs - which in the present, dispersed systems are high - and on reliability of use, levelling down of the effect of occasional load peaks, etc.

However, district cooling systems have not become general due to heavy investment costs. Although the kWh price of the chill generated in this way is low as compared with the price of electricity, the number of hours when chill is needed is too small to cover the investment costs in those climatic zones where district heating systems are worth building. For example in Finland, such systems have thus not been built. The majority of them exist in Japan, Korea and the U.S.A.

Simultaneously filed Finnish Patent Application 940,342, not prepublished, discloses a thermal energy distribution system in which the costs of the distribution network can be essentially reduced by arranging a common return pipe for the cooling and heating water. The application also discloses embodiments by which the costs of a district cooling network can be lowered further. The condition is that the heating, plumbing and air conditioning systems of the building are designed in accordance with the principles set forth in Finnish Patent Applications 921,034 and 915,511.

Further, simultaneously filed Finnish Patent Application 940,343, not prepublished, discloses a heat transfer system by which separate heat-exchangers between the cooling network of the building and the district cooling system become unnecessary. This eliminates one of the big cost items of the district cooling system.

The biggest cost item of the system, however, consists of absorption aggregates and their condensers. For example in 'Concentrated cooling', a research conducted by order of the Finnish Ministry of Trade and Industry and the Thermal Power Plant Association, their proportion to the overall investments was observed to be about 50%.

DE-A-28 17 093 discloses the features of the preamble of claim 1 and 4. Furthermore, US-A-3 853 172 discloses a three-pipe system where separate streams of chilled liquid an heated liquid are supplied to the devices in the room, and a single stream of return liquid. When there is an excess of heat in the system, a part of the hot liquid or of the return liquid flows through a cooling tower which acts as a heat-sink for the system.

The object of the invention is to provide a method and a system by which the drawbacks of the prior art can be eliminated. This is achieved with the method and system according to the invention. The method of the invention is characterized by using return liquid of a heating energy/cooling energy transferring system as condensation water in the cooling aggregate, and supplying at least part of the condensation water leaving the cooling aggregate directly back to the return liquid of the heating energy/cooling energy transferring system. The system of the invention, in turn, in characterized in that a cooling aggregate is arranged to be condensated by return liquid obtained from a return pipe of a heating energy/cooling energy transferring system, and that at least part of the liquid used for the condensation is arranged to be supplied directly back to the return pipe.

The major advantage of the invention is that the overall costs of the absorption aggregate can be essentially lowered as compared with the prior art, which greatly improves profitability of the district cooling system. The heating power conducted to the absorption aggregate can be re-used in its entirety for pre-heating the supply water of the district heating system. Further, the invention solves many technical problems that concern corrosion, treatment of raw water, hygiene, and health hazards. When construction of a district cooling system becomes possible in practice, the above advantages of district chill are also achieved.

In the following, the invention will be described in greater detail with reference to the embodiments illustrated in the attached drawing, wherein
Fig. 1 shows a general view of a 2-chamber absorption aggregate,
Fig. 2 shows, schematically, how the aggregate of Fig. 1 is connected to a district cooling and an energy production system,
Fig. 3 shows a general view of a first embodiment of the system according to the invention, and
Fig. 4 shows a general view of a second embodiment of the system according to the invention.

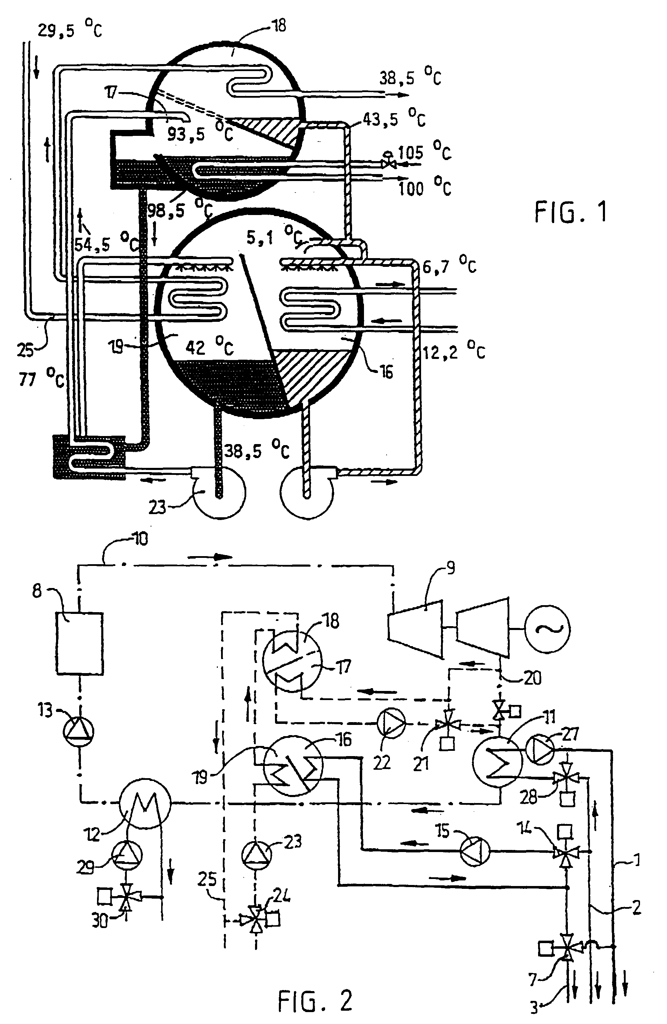

Fig. 1 shows a conventional 2-chamber lithiumbromide/water absorption aggregate. Fig. 2, in turn, illustrates how the aggregate of Fig. 1 is connected to a district cooling and an energy production system. Fig. 1 also shows the temperatures prevailing at different parts of the absorption aggregate. For the sake of clarity, Fig. 2 does not include a circuit for a refrigerant.

The aggregate operates on the following principle. In a boiler element 17 of the aggregate, where the pressure is higher, water and lithiumbromide are present as a solution. The lithiumbromide is boiled from the solution by means of hot water or steam, which is obtained from a condensation pipe 20 of a turbine 9 by means of a pump 22, and returned to the condensation pipe at a lower temperature through a control valve 21.

The evaporated lithiumbromide is condensated to liquid form in a condensation element 18, where it is cooled by condensation water withdrawn from a water cooler through a condensation pipe 25 and through a control valve 24 by a cooling water pump 23.

The lithiumbromide condensed to liquid form flows to an evaporator element 16, where it is evaporated by low pressure. During evaporation, heat is absorbed, and so the temperature marked in Fig. 1 is achieved. The water obtained from a return pipe 2 of the district cooling network via a control valve 14 by a pump 15 is cooled in the evaporator element 16 and pumped into a supply pipe 3 of the district cooling system.

In the absorption aggregate, the lithiumbromide flows from the evaporator element 16 to an absorption element 19, where it absorbs water, re-producing a solution, and is pumped back into the boiler portion 17 by pump 23. The liquefaction in the absorption element is effected by cooling with the condensation water obtained through pump 23, valve 24 and pipe 25.

The figures do not show a device for cooling the condensation water. In an absorption aggregate, heated water is usually cooled in sea water heat-exchangers, cooling towers or the like.

The temperatures at the different parts of the absorption aggregate marked in Fig. 1 show that the temperature of the condensation water is almost the same as the temperature of the return water in a district cooling/district heating system.

The above observation has led to the realization on which the present invention is based: instead of water produced in separate cooling apparatus, return water obtained from the district heating/district cooling system is used as condensation water in the absorption aggregate, and when it has absorbed the excess heat of the absorption aggregate, the return water is returned, pre-heated, to the return pipe for use in the production of hot tap water.

The above basic idea significantly reduces the investment costs of the absorption aggregate. According to the research mentioned above, the cooling of the condensation water makes up about 30% of the overall costs of the absorption aggregate, i.e. about 15% of the investments in the whole district cooling system. This cost item is here totally eliminated, or at least essentially reduced.

In addition to the above, it should also be noted that the condensation circuit can be implemented as a closed-loop circuit, whereby the corrosion, dirtying and clogging problems of the cooling systems and the associated maintenance costs can be either fully eliminated or essentially reduced. When the invention is used, no investment or operational costs concerning the treatment of water are needed, nor fees for the consumption of water. A special problem with cooling towers is a health hazard brought about by the fact that legionella and other similar bacteria grow in these cooling towers. This drawback is also eliminated or at least essentially reduced by the present invention.

The above is intended to clarify the background and basis of the invention.

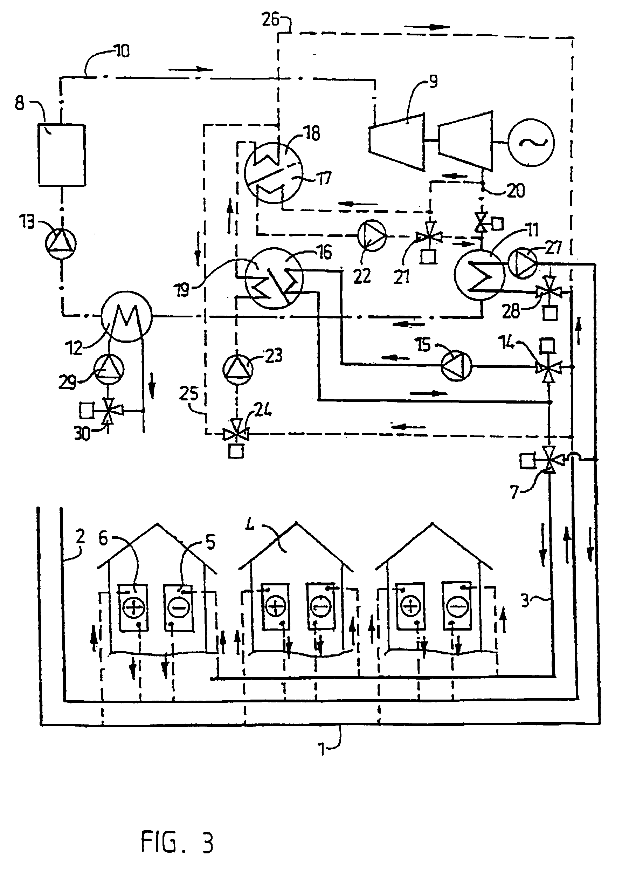

Fig. 3 shows a first embodiment of the system according to the invention. In Fig. 3, water is withdrawn from the return pipe 2 of the district heating/cooling system through a pipe 34 and control valve 24 by pump 23, and pumped into the absorption element 19 of the absorption aggregate and further to the condensation element 18. Most of the water is conducted through return pipe 26 back to the return pipe 2 of the district heating/district cooling system. If full cooling power is not needed, part of the water is returned through the circulating pipe 25 to pump 23.

The water pumped through return pipe 26 into the return pipe 2 of the district heating system and pre-heated to a temperature of about 40°C mixes with that part of the return water which has not been separated by valve 14 and pump 15 to be cooled in the evaporator element 16 of the absorption aggregate and to be conducted as district cooling water to the supply pipe 3 of the district cooling system. The mixed water is pumped through a control valve 28 into a heat-exchanger 11 by means of a pump 27; in the heat-exchanger, it is heated to a temperature of about 65° to 75°C in the summer and conducted to a supply pipe 1 of the district heating system. A valve 7 closes the pipe between the district heating pipe 1 and the district cooling pipe 3 in the summer; in the winter the pipe is opened if the district cooling pipe 3 is to be used for storing heat or for transferring district heat.

Part of the condensate obtained from the turbine 9 is pumped by pump 22 into the boiler element of the absorption aggregate, where it evaporates the lithiumbromide from the water, and further through control valve 21 back to the condensation pipe. The mixed condensate flows through the heat-exchanger 11 to a condenser 12, which is cooled e.g. by raw water obtained through a control valve 30 by a pump 29. From there the water is pumped by a supply water pump 13 into a steam boiler 8, and the steam generated therein is conducted by a pipe 10 to the turbine 9, where the steam condenses and subsequently returns to the condensation pipe 20.

District heating water is conducted by pipe 1 to heat-consuming devices 6 in buildings 4, in the summer usually to the tap water heat-exchangers. Correspondingly, district cooling water is conducted by pipe 3 to devices 5 that require cooling power, usually to the heat-exchangers serving air-conditioning apparatus. From both the above devices, the water returns to common return pipe 2.

The problem with the application of the invention is that the consumption of tap water in the buildings varies greatly, and that the estimated daily consumption in buildings where cooling is necessary is not sufficient to cover the water current needed for the cooling of the absorption aggregate, if the water temperature before the aggregate is +25°C and after the aggregate +40°C, and if the supply water temperature is +65°C.

Usually in communities in the temperate zone, most buildings do not have a cooling system; e.g. in dwelling houses a cooling system is very rare. Further, for most buildings, evaporative cooling is sufficient. For example in Finland, less than 10% of all new buildings have a mechanical cooling system. Even in these buildings, however, tap water is needed. The overall consumption of tap water in a community is usually sufficient to cover the cooling water demand of an absorption aggregate serving buildings that need cooling. To illustrate this, the district heating pipe 1 and the return pipe extend in Fig. 3 past the buildings 4 that need to be cooled. Fig. 3 also illustrates the fact that it is usually not economic to build a district cooling network but in the very centre of the community.

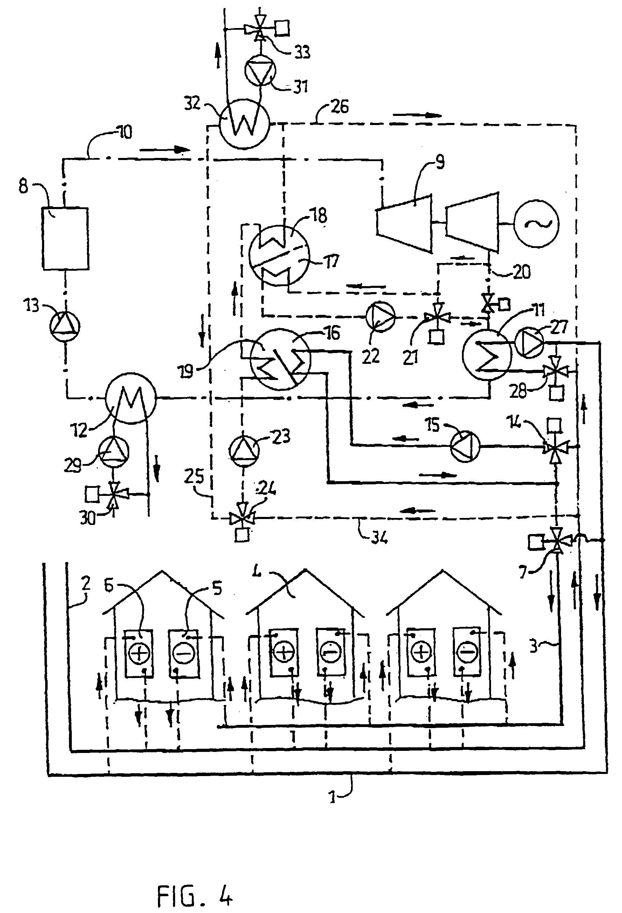

If, however, the consumption of tap water in some special case is not sufficient, the principle of the invention can be applied in accordance with Fig. 4. In Fig. 4 there is a condenser 32 arranged in the circulating pipe of the cooling circuit in the absorption aggregate, circulated water being cooled in said condenser e.g. with a pump 31 by means of raw water circulated through a control valve 33. The size of the condenser 32 is, in any case, only a fraction of the size of a condenser in a conventional system. This solution still means great savings in investments, but the other technical advantages are partly lost. However, it should be born in mind that the condenser 32 is used only for a short time in a peak load situation, so clogging, corrosion and other problems are clearly smaller than in conventional plants, and so are e.g. the raw water costs.

The network has storage capacity by which it is able to level down the short-term, 1- or 2-hour peaks of tap water consumption. Instead, levelling down of long-term peaks is more difficult. In office and business premises and public buildings, the tap water consumption peak and the maximum cooling power coincide and compensate for each other. Instead, in dwelling houses, which are the buildings whose tap water consumption should be utilized, the situation is different.

In dwelling houses, tap water consumption is fairly even on weekdays from 7 am to 3 pm and then starts to increase. The peak is reached at about 9 pm. Night-time consumption is small.

In office premises, cooling demand already arises at 9 am, reaches the maximum at 11 am and remains constant until 6 pm, coming to an end at 8 pm. The consumption is even, due to the peak-cutting capacity of evaporative cooling.

The phase shift between the peak consumption of tap water and the maximum cooling efficiency is so great that a district cooling network is not able to compensate for it. The above problem can be eliminated by means of a chill accumulator suitably arranged in the system or in connection therewith.

The invention is described above by means of certain kinds of embodiments. The invention, however, is not limited to the above embodiments, but it can be modified quite freely within the scope of the claims. It is thus to be understood that the system of the invention does not necessarily have to be identical to what is illustrated in the figures but other kinds of solutions are also possible. All pipe connections that are known *per se* can be utilized in the invention. The absorption aggregate can also be replaced by other known cooling aggregates, if the temperature of the condensation water is suitable, etc.

## Claims

1. A method concerning a thermal energy distribution system, in which method heating energy absorbed into a heat carrier and concentratedly generated for heating of buildings (4) is distributed by means of one pipe or one group of pipes (1) to heating devices (6) arranged in the buildings and, correspondingly, cooling energy concentratedly generated by an absorption-type cooling aggregate (16-19) is distributed by a second pipe or group of pipes (3) to cooling devices (5) in the buildings, **characterized** in that in order to remove or substantially to reduce devices, cooling condensation water of the cooling aggregate return liquid (2) of a heating energy/cooling energy transferring system is used as condensation water in the cooling aggregate (16-19), and at least part of the condensation water leaving the cooling aggregate (16-19) is supplied directly back to the return liquid (2) of the heating energy/cooling energy transferring system.

2. The method according to claim 1, **characterized** in that the water circulated in the cooling circuit of the cooling aggregate (16-19) is cooled by means of a condenser (32).

3. The method according to claim 1 or 2, **characterized** in that condensation water is used for producing hot supply water for a district heating system.

4. A thermal energy distribution system, in which heating energy absorbed into a heat carrier and concentratedly generated for heating of buildings (4) is arranged to be distributed by means of one pipe or one group of pipes (1) to heating devices (6) arranged in the buildings and, correspondingly, cooling energy concentratedly generated by an absorption-type cooling aggregate (16-19) is arranged to be distributed by a second pipe or group of pipes (3) to cooling devices (5) in the buildings, **characterized** in that in order to remove or substantially to reduce devices cooling condensation water of the cooling aggregate the cooling aggregate (16-19) is arranged to be condensated by return liquid obtained from a return pipe (2) of a heating energy/cooling energy transferring system, and that at least part of the liquid used for the condensation is arranged to be supplied directly back to the return pipe (2).

5. The system according to claim 4, **characterized** in that a condenser (32) is arranged in a circulating pipe (25) of the cooling circuit in the cooling aggregate (16-19).

6. The system according to claim 4 or 5, **characterized** in that the liquid used for the condensation is arranged to be used for producing hot supply water for district heating.

## Patentansprüche

1. Verfahren betreffend ein Verteilungssystem für thermische Energie, derart, daß bei dem Verfahren Heizenergie, das in einem Wärmeträger absorbiert und konzentriert zum Heizen von Gebäuden (4) erzeugt ist, mittels einer Leitung oder einer Gruppe von Leitungen (1) in Gebäuden angeordneten Heizeinrichtungen (6) verteilt wird, und in ähnlicher Weise konzentriert durch ein Kühlaggregat (16 - 19) vom Absorptionstyp erzeugte Kühlenergie durch eine zweite Leitung oder Gruppe von Leitungen (3) zu Kühleinrichtungen (5) in dem Gebäude verteilt wird, **dadurch gekennzeichnet, daß** zum Entfernen oder für ein wesentliches Reduzieren von Einrichtungen Kühlkondensationswasser der Kühlaggregat-Rückführflüssigkeit (2) eines Heizenergie/Kühlenergie-Übertragungssystems als Kondensationswasser in dem Kühlaggregat (16 - 19) eingesetzt wird und zumindest ein Teil des das Kühlaggregat (16 - 19) verlassenden Kondensationswassers direkt zu der Rückführleitung (2) des Heizenergie/Kühlenergie-Übertragungssystems zugeführt wird.

2. Verfahren nach Anspruch 1, dadurch gekennzeichnet, daß das in dem Kühlkreis des Kühlaggregats (16 - 19) zirkulierende Wasser durch einen Kondensator (32) gekühlt wird.

3. Verfahren nach Anspruch 1 oder 2, dadurch gekennzeichnet, daß das Kondensationswasser zum Herstellen von Heizversorgungswasser für ein Distriktheizsystem eingesetzt wird.

4. Verteilungssystem für thermische Energie, bei dem Heizenergie, die in einem Wärmeträger absorbiert und konzentriert zum Heizen von Gebäuden (4) erzeugt ist, für eine Verteilung mittels einer Leitung oder einer Gruppe von Leitungen (1) an in Gebäuden angeordnete Heizeinrichtungen (6) vorgesehen ist und in ähnlicher Weise Kühlenergie, die konzentriert durch ein Kühlaggregat (16 - 19) vom Absorptionstyp erzeugt ist, für eine Verteilung durch eine zweite Leitung oder eine Gruppe von Leitungen (3) an Kühleinrichtungen (5) in Gebäuden vorgesehen ist, **dadurch gekennzeichnet, daß** zum Vermeiden oder wesentlichen Reduzieren von Einrichtungen Kühlkondensationswasser des Kühlaggregats das Kühlaggregat (16 - 19) zum Kondensieren durch eine Rückführflüssigkeit vorgesehen ist, die von einer Rückführleitung (2) eines Heizenergie/Kühlenergie-Übertragungssystems erhalten wird und daß zumindest ein Teil der für die Kondensation eingesetzten Flüssigkeit für ein direktes Rückführen zu der Rückführleitung (3) vorgesehen ist.

5. System nach Anspruch 4, dadurch gekennzeichnet, daß ein Kondensator (32) in einer Umwälzleitung (25) des Kühlkreises in dem Kühlaggregat (16 - 19) angeordnet ist.

6. System nach Anspruch 4 oder 5, dadurch gekennzeichnet, daß die zum Kondensieren eingesetzte Flüssigkeit für den Einsatz beim Produzieren von heißem Versorgungswasser für die Distriktheizung vorgesehen ist.

## Revendications

1. Procédé concernant un système de distribution d'énergie thermique, dans lequel de l'énergie thermique absorbée dans un caloporteur et engendrée de façon concentrée pour le chauffage de bâtiments (4) est distribuée au moyen d'un tube ou d'un groupe de tubes (1) aux appareils de chauffage (6) agencés dans les bâtiments et, de façon correspondante, l'énergie de refroidissement engendrée de façon concentrée par une unité de refroidissement du type à absorption (16-19) est distribuée par un second tube ou groupe de tubes (3) à des appareils de refroidissement (5) dans les bâtiments, caractérisé en ce que, afin de supprimer ou de réduire sensiblement les appareils, l'eau de condensation du liquide de retour (2) de l'unité de refroidissement d'un système de transfert d'énergie de chauffage/refroidissement est utilisée comme eau de condensation dans l'unité de refroidissement (16-19), et en ce qu'au moins une partie de l'eau de condensation qui quitte l'unité de refroidissement (16-19) est fournie directement en retour au liquide de retour (2) du système de transfert d'énergie de chauffage/ refroidissement.

2. Procédé selon la revendication 1, caractérisé en ce que l'eau qui circule dans le circuit de refroidissement de l'unité de refroidissement (16-19) est refroidie au moyen d'un condenseur (32).

3. Procédé selon l'une ou l'autre des revendications 1 et 2, caractérisé en ce que l'eau de condensation est utilisée pour produire de l'eau d'alimentation chaude pour un système de chauffage par secteur.

4. Système de distribution d'énergie thermique, dans lequel de l'énergie thermique absorbée dans un caloporteur et engendrée de façon concentrée pour le chauffage de bâtiments (4) est agencée de manière à être distribuée au moyen d'un tube ou d'un groupe de tubes (1) à des appareils de chauffage (6) agencés dans les bâtiments et, de façon correspondante, de l'énergie de refroidissement engendrée de façon concentrée par une unité de refroidissement du type à absorption (16-19) est agencée de manière à être distribuée par un second tube ou groupe de tubes (3) à des appareils de refroidissement (5) dans les bâtiments, caractérisé en ce que, afin de supprimer ou de réduire sensiblement les appareils, l'eau de condensation de refroidissement de l'unité de refroidissement (16-19) est agencée de manière à être condensée par du liquide de retour obtenu depuis un tube de retour (2) d'un système de transfert d'énergie de chauffage/refroidissement, et en ce qu'au moins une partie du liquide utilisé pour la condensation est agencée de manière à être fournie directement en retour vers le tube de retour (2).

5. Système selon la revendication 4, caractérisé en ce qu'un condenseur (32) est agencé dans un tube de circulation (25) du circuit de refroidissement dans l'unité de refroidissement (16-19).

6. Système selon l'une ou l'autre des revendications 4 et 5, caractérisée en ce que le liquide utilisé pour la condensation est agencé de façon à être utilisé pour produire de l'eau d'alimentation chaude pour le chauffage par secteur.
